# EUROPEAN PATENT APPLICATION

(11) **EP 4 484 101 A1**
(43) Date of publication of application: **01.01.2025**
(21) Application number: 23182585.2
(22) Date of filing: 30.06.2023
(51) Int. Cl.: B28B 1/00, B28B 3/26, B28B 23/02, B29C 64/106, B29C 64/209, B33Y 10/00, B33Y 30/00, E04G 21/04

(54) **3D PRINT HEAD AND PRINTING SYSTEM COMPRISING IT**

(30) Priority: 29.06.2023 PT 2023118775
(71) Applicant: Instituto Politécnico De Leiria, 2411-901 Leiria (PT); Pronum - Maquinas e Equipamentos, Lda, 2445-413 Pataias (PT)
(72) Inventor: LOLA DA SILVA, Miguel Filipe, MARINHA GRANDE (PT); MENDES GASPAR, Florindo José, MARINHA GRANDE (PT); DOS SANTOS MATEUS, Artur Jorge, MARINHA GRANDE (PT); DA SILVA CARREIRA, Pedro José, MARINHA GRANDE (PT); DOS SANTOS LAGARES, Marco Edgar, PATAIAS (PT)
(74) Representative: do Nascimento Gomes, Rui

(57) **Abstract**

The present disclosure relates to the field of additive manufacturing, more specifically to three-dimensional (3D) printing of mortar with vertical mesh reinforcement insertion and a printing system (20) comprising it, for the construction area. The present disclosure comprises a print head device (1) for additive manufacturing providing structural reinforcement in the form of a mesh, allowing the mesh to go through the printing device while not dragging the printed material - mortar-with it.

## Description

### Field of the Disclosure

The present disclosure relates to the field of additive manufacturing, more specifically to three-dimensional (3D) printing of mortar with vertical mesh reinforcement insertion and a printing system comprising it, for the construction area.

### Background of the Disclosure

3D printing for the construction area conceives objects - constructions - by layering material with printing technology. Structural reinforcement of 3D printed materials may be applied to improve ductility and tensile strength, for example.

In current 3D mortar printing technologies with structural reinforcement there is still no automated mesh insertion available on the market, conceivably because the mesh may be dragged by the printing material. The present disclosure provides a solution for said issue, allowing the mesh to go through the printing device while not dragging the printed material - mortar-with it.

Additionally, the present disclosure can be applied to different types of mortar: cementitious, geopolymeric or clay-based products.

### General Description of the Disclosure

The present disclosure comprises a print head device for additive manufacturing providing structural reinforcement and comprising a body forming a front plane, a back plane, at least one top opening, at least two mortar material passage channels divided by a splitter, and a bottom outlet, wherein:
- the front plane comprises a central opening adapted for a structural reinforcement in the form of a mesh to pass through the central opening being aligned with the splitter,
- the back plane is provided oppositely to the front plane and has an open section aligned with the opening,
- the top inlet is connectable to a feed tube and is in connection with the channels, the splitter thereby being configured such that an inlet mortar material from the feed tube is divided through the at least two channels,
such that a depositing of the mortar material which enters the body, passes through the channels and exits the body through the bottom outlet and the open section of the back plane is simultaneous with a provision of a structural reinforcement in the form of a mesh passing through the opening which thereby is covered by the deposited mortar material. This allows the mesh to go through the printing device while not dragging the printed material - mortar - with it.

In a further embodiment, the present disclosure relates to a 3D print head adapted such that the mortar material is a cementitious, geopolymeric or clay-based product.

In a further embodiment, the present disclosure relates to a 3D print head wherein the top inlet comprises means for coupling to a mortar material feed tube.

In a further embodiment, the present disclosure relates to a 3D print head wherein the means for coupling to a mortar material feed tube comprise two projections suitable for coupling to a mortar material feed tube.

In a further embodiment, the present disclosure relates to a 3D print head wherein the 3D print head further comprises blockage means, the blockage means being arranged to, upon actuation, be movable between a blocked position in which the passage of mortar material through the channels is blocked and mortar material is unable to pass towards the outlet, and an unblocked position in which the passage of mortar material through the channels is unblocked and mortar material is able to pass towards the outlet.

In a further embodiment, the present disclosure relates to a 3D print head wherein the blockage means comprise projections which protrude from the back plane, the projections being independently actuatable and, upon actuation, provide the blockage means to move from the blocked position to the unblocked position or from the unblocked position to the blocked position.

In another embodiment, the present disclosure relates to a 3D printing system comprising the print head device, and a structural reinforcement feed means arranged to feed structural reinforcement in the form of a mesh to the print head device, in particular to said central opening.

In a further embodiment, the present disclosure relates to a 3D printing system wherein the structural reinforcement feed means comprise a structural reinforcement feeder and structural reinforcement cutting means configured to cut the mesh at an outlet of the feeder. The feeding system provides enough space for the reinforcement structure to pass through without interference of the previous reinforcement structure. Moreover, the cutting means allow that the system is moved without twisting the reinforcement structure or resorting to additional tools.

In a further embodiment, the present disclosure relates to a 3D printing system wherein it further comprises a feed tube couplable to the top inlet.

In a further embodiment, the present disclosure relates to a 3D printing system, when the print head device is included, wherein it further comprises actuating means configured to actuate the blockage means to move from the blocked position to the unblocked position or from the unblocked position to the blocked position and, optionally, the blockage means of the print head device comprises projections which protrude from the back plane and the actuating means comprise further projections which are able to be coupled or provided adjacently to the blockage means and thereby actuate the blockage means upon actuation of the further projections on the projections of the blockage means.

In a further embodiment, the present disclosure relates to a 3D printing system, wherein the actuating means are further configured to control the opening and closing of a mortar material fed through the feed tube.

In a further embodiment, the present disclosure relates to a 3D printing system wherein the actuating means further comprise controllable actuating means to control of a servomotor, a stepper motor, two pneumatic actuators and a robotic arm.

In another embodiment, the present disclosure relates to a mortar material deposition method with structural reinforcement comprising the steps of:
- providing a mortar material through a splitter and towards two channels,
- simultaneously providing a structural reinforcement in the form of a mesh through an opening aligned with the splitter, such that both sides of the mesh are flanked by mortar material incoming from the channels,
- thereby obtaining a structurally reinforced mortar based construction, wherein a movement of the mesh in its provision is from a section from which the mortar leaves the channels towards the opening.
and, optionally, the method is implemented with resort to the print head device.

A mortar material deposition with structural reinforcement method comprising the steps of:
- providing a mortar material through a splitter and towards two channels,
- simultaneously providing a structural reinforcement in the form of a mesh through an opening aligned with the splitter, such that both sides of the mesh are flanked by mortar material incoming from the channels,
- thereby obtaining a structurally reinforced mortar based construction in a first position, and, upon obtaining a structurally reinforced mortar based construction, cutting the reinforcement structure and
- providing a mortar material through a splitter and towards two channels,
- simultaneously providing a structural reinforcement in the form of a mesh through an opening aligned with the splitter, such that both sides of the mesh are flanked by mortar material incoming from the channels,
- thereby obtaining a structurally reinforced mortar based construction, in a second position, different from the first position
and, optionally, the method is implemented with resort to the 3D printing system.

### Brief Description of Figures

The following figures provide preferred embodiments for illustrating the disclosure and should not be seen as limiting the scope of disclosure.

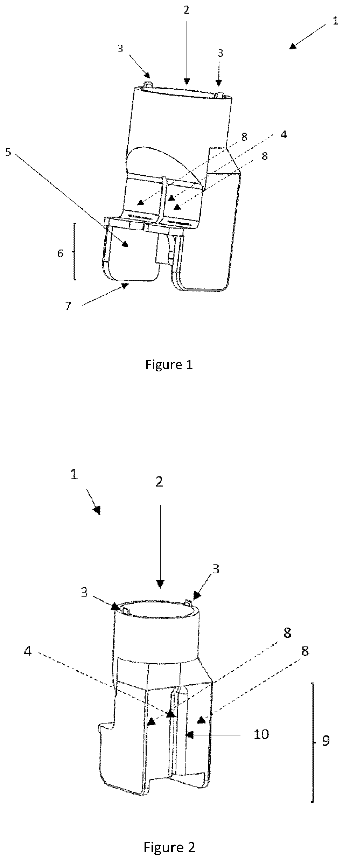

**Figure 1****.** A perspective view of an embodiment of a print head device (1) according to the present disclosure, particularly a view which highlights the back plane (6), wherein the top inlet (2), the top inlet projections (3), the open section (5), and the bottom outlet (7) are viewable. The splitter (4) and the channels (8) are indicated in dashed arrows, as they are not directly viewable, being provided within the walls of a body of the print head device (1).
**Figure 2****.** A second perspective view of the embodiment of a print head device (1), particularly a view which highlights the front plane (9), wherein the top inlet (2), the top inlet projections (3), and the central opening (10) are viewable. The splitter (4) and the channels (8) are indicated in dashed arrows, as they are not directly viewable, being provided within the walls of a body of the print head device (1).

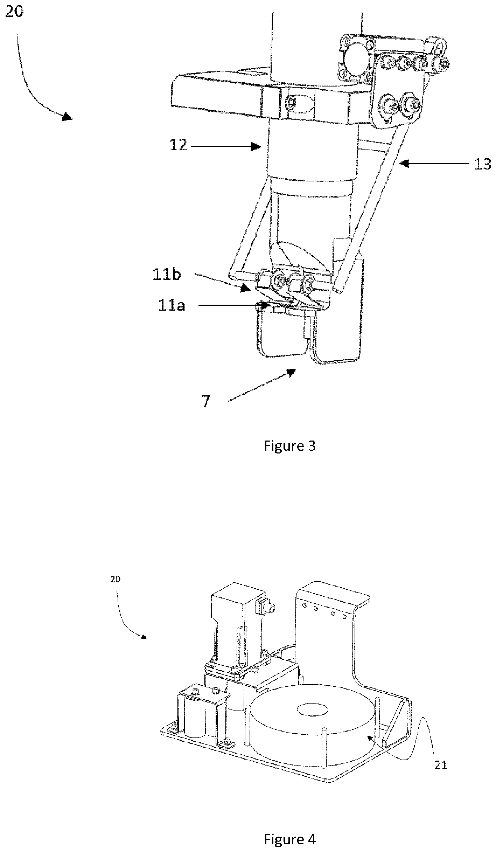

**Figure 3****.** A perspective view of an embodiment of a part of the 3D printing system (20) according to the present disclosure, a part which comprises the print head device (1), blockage means (13) and a closing subset comprising actuating means configured to actuate the blockage means (13) and the back plane (6) and the bottom outlet (7) are viewable.
**Figure 4****.** A perspective view of an embodiment of the feed and cutting systems of the reinforcement structure, which are part of the 3D printing system (20), highlighting the structural reinforcement feed means (21).

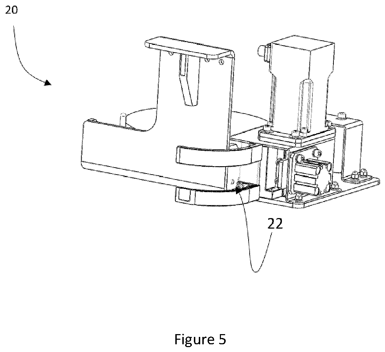

**Figure 5****.** A second perspective view of the embodiment of Figure 4, highlighting the structural reinforcement cutting means (22).

### Detailed Description of the Disclosure

The present disclosure addresses the difficulties of printing with vertical mesh reinforcement insertion. The system is divided into several subsets, the main ones being the feed and cutting system of the reinforcement structure, the tangential rotation system, the connection to the robotic arm and the opening and closing system of the feed channel.

Since the printed material is mortar, after finishing printing, all surfaces that have been in contact with the material must be cleaned to avoid its accumulation inside the equipment, which, if it happens, could increase the system's pressure, and the worst case scenario being clogging and consequent equipment failure. Therefore, a removable inner tube was designed to facilitate the cleaning operation of the system, this tube is fixed by safety clips and contained by their bases, its removal being considered a maintenance process.

The equipment is attached to the robotic arm through a plate that will be the reference for the assembly and disassembly process, since both the inner tube and the printing set (tangential rotation, closing and opening of channels and feed and cutting systems of the reinforcement structure) are fixed here by means of clamps. The use of clamps in this equipment is essential in order to facilitate the washing and cleaning process, since the alternatives would require the use of screws to keep the components in the desired location.

Regarding tangential rotation, it will be driven by a servomotor coupled to a gearbox that will rotate the outer tube, which is where the cutting and the channel's opening and closing subassemblies are fixed (such as the extrusion head). This assembly is based on a bearing in a way that the friction caused by its rotation is reduced as possible.

The feed channels opening and closing system comprises a pneumatic drive system that uses a lever to move the plates that move in sections present inside the print head and that control the feed flow of. Since these sections were developed to be as close as possible to the printed layer, there is no need to close the channel in advance, as the volume of remaining material can be neglected.

There are also two pairs of rollers, the first of which is free and in charge of increasing the tension of the mesh between it and the motor pair and directing it correctly (since the meshes by default have a small vice due to being rolled up). For the second pair, the motor pair, the rollers have a higher roughness to prevent mesh slipping at this point, as slipping would imply a mismatch between the distance travelled by the print head and the size of the mesh fed, which would cause problems of integrity to the final print, or even a forced stop during printing.

After cutting the mesh, there are two guides (upper and lower), which will guide the mesh practically to the entrance of the print head. The lower one also pushes the mesh already present in the print (of the previously printed layer), so that the new mesh has space to pass through without interference from the previous one. This step is very important as the entrance to the extrusion head is considerably reduced.

Since the mesh is wound on a cardboard roll and resting on the metal base, a bushing was inserted in the centre of the roll to facilitate its sliding, keep it centred on the equipment and reduce friction as much as possible without making the equipment more expensive.

The equipment's print head is also designed by 3D printing, but in this case using the FDM (Fused Deposition Modelling) method, as its geometry that is too complex for conventional manufacturing processes, which would make its manufacture too expensive. This component has an opening in the centre of the front plane to allow the passage of the mesh without the mortar contacting its upper part. The channels have been developed so that the mortar adheres to the surface of the mesh, and so that there is a compaction process in this area, considerably reducing the presence of air bubbles near the surface of the mesh.

At the top, there are two projections to ensure that there is only one way of assembling the head and the outer tube, and it is also on this surface that the inner tube ends, where there is a plastic bushing at its end to allow contacting with reduced wear of the remaining components.

The printing system control system will control the whole printing process. To facilitate its organization, the programming of the controllers was divided into three phases, these being the start of printing, the printing and the completion of the layer, and the following variables were defined as control variables:
- Tangential rotation of the equipment;
- Continuous and controlled feeding of the reinforcement mesh;
- Opening and closing channels for printing mortar;
- Mesh cutting;
   - Return to the initial position of the equipment after completing the layer (in order to avoid the equipment being strangled by the cables and tubes belonging to the above-mentioned systems).

In summary, the program foresees the control of a servomotor, a stepper motor, two pneumatic actuators and a robotic arm.

To start printing, the program foresees the prior feeding of the mesh by the stepper motor, and the opening of the feed channels only when the mesh has covered the total distance between the stepper motor roller and its final position. After opening the channels, the robotic arm will start the printing path and the servomotor will be in charge of keeping the print head tangent to the layer's printing path. In short, in this phase it is foreseen the activation of all the variables present in the system.

During the layer's printing period, in addition to the printing and mesh feeding speeds remaining constant and equal, the system only has to maintain the printing direction tangent to the defined path.

As for the completion of the layer, a momentary stop is foreseen so that the cut can be carried out correctly, a stop that happens when the distance to the end of the layer is equal to the distance travelled by the mesh between the cutting system and the print head. This distance may or may not change depending on the experimental results, but it will not vary much, as a cut before this point means that the mesh will not be present in the entire layer, and a later cut implies an excess of mesh at the junction of the initial point with the ending.

For situations where the printing path is closed (the beginning and the end of the layer are at the same point), the equipment will have to turn around in the opposite direction to what it did when printing after completing the layer, so that the cables and pipes forming part of the system are not subjected to unnecessary stress.

If an emergency stop is necessary, the system foresees the immediate cutting of the mesh, followed by the closure of the feed channels and the return of the equipment to its original position.

## Claims

1. A three-dimensional (3D) print head device (1) for additive manufacturing providing structural reinforcement and comprising a body forming a front plane (9), a back plane (6), at least one top inlet (2), at least two mortar material passage channels (8) divided by a splitter (4), and a bottom outlet (7), wherein:
- the front plane (9) comprises a central opening (10) adapted for a structural reinforcement in the form of a mesh to pass through, the central opening (10) being aligned with the splitter (4),
- the back plane (6) is provided oppositely to the front plane (9) and has an open section (5) aligned with the opening
- the top inlet (2) is connectable to a feed tube (12) and is in connection with the mortar material passage channels (8), the splitter (4) thereby being configured such that an inlet mortar material from the feed tube (12) is divided through the at least two channels (8),
such that a depositing of the mortar material which enters the body, passes through the channels (8) and exits the body through the bottom outlet (7) and the open section (5) of the back plane (6) is simultaneous with a provision of structural reinforcement in the form of a mesh passing through the opening which thereby is covered by the deposited mortar material.

2. A print head device (1) according to claim 1 wherein it is adapted such that the mortar material is a cementitious, geopolymeric or clay-based product.

3. A print head device (1) according to any of the previous claims, wherein the top inlet (2) comprises means for coupling to a mortar material feed tube (12).

4. A print head device (1) according to the previous claim wherein the means for coupling to a mortar feed tube (12) comprise two projections (3) suitable for coupling to a mortar feed tube (12).

5. A print head device (1) according to any of the previous claims wherein it further comprises blockage means (13), the blockage means (13) being arranged to, upon actuation, be movable between a blocked position in which the passage of mortar material through the channels (8) is blocked and mortar material is unable to pass towards the bottom outlet (7), and an unblocked position in which the passage of mortar material through the channels (8) is unblocked and mortar material is able to pass towards the bottom outlet (7).

6. A print head device (1) according to the previous claim wherein the blockage means (13) comprise projections (11a) which protrude from the back plane (6), the projections (11a) being independently actuatable and, upon actuation, provide the blockage means (13) to move from the blocked position to the unblocked position or from the unblocked position to the blocked position.

7. A 3D printing system (20) comprising the print head device (1) of any of the preceding claims, and structural reinforcement feed means (21) arranged to feed structural reinforcement in the form of a mesh to the print head device (1), in particular to the said central opening (10).

8. A system (20) according to the previous claim wherein the structural reinforcement feed means (21) comprise a structural reinforcement feeder and structural reinforcement cutting means (22) configured to cut the mesh at an outlet of the feeder.

9. A system according to any of the claims 7-8 wherein it further comprises a feed tube (12) couplable to the top inlet (2).

10. A system (20) according to any of the claims 7-9, when the print head device (1) is in accordance with claim 5 or 6, wherein it further comprises actuating means configured to actuate the blockage means (13) to move from the blocked position to the unblocked position or from the unblocked position to the blocked position and, optionally, the print head device (1) is in accordance with claim 6 and the actuating means comprise further projections (11b) which are able to be coupled or provided adjacently to the blockage means (13) and thereby actuate the blockage means (13) upon actuation of the further projections (11b) on the projections of the blockage means (13).

11. A system (20) according to claim 10 wherein the actuating means are further configured to control the opening and closing of a mortar material fed through the feed tube (12).

12. A 3D printing system (20) according to any of the claims 11-12 wherein the actuating means further comprise controllable actuating means to control of a servomotor, a stepper motor, two pneumatic actuators and a robotic arm.

13. A mortar material deposition method with structural reinforcement comprising the steps of:
- providing a mortar material through a splitter (4) and towards two channels (8),
- simultaneously providing a structural reinforcement in the form of a mesh through an opening aligned with the splitter (4), such that both sides of the mesh are flanked by mortar material incoming from the channels (8),
- thereby obtaining a structurally reinforced mortar based construction,
wherein a movement of the mesh in its provision is from a section from which the mortar leaves the channels (8) towards the opening.
and, optionally, the method is implemented with resort to the print head device (1) of any of the claims 1-6.

14. A mortar material deposition method with structural reinforcement comprising the steps of:
- providing a mortar material through a splitter (4) and towards two channels (8),
- simultaneously providing a structural reinforcement in the form of a mesh through an opening aligned with the splitter (4), such that both sides of the mesh are flanked by mortar material incoming from the channels (8),
- thereby obtaining a structurally reinforced mortar based construction in a first position.

15. A mortar material deposition method according to the previous claim wherein it further comprises, upon obtaining a structurally reinforced mortar based construction, cutting the mesh and:
- providing a mortar material through a splitter (4) and towards two channels (8),
- simultaneously providing a structural reinforcement in the form of a mesh through an opening aligned with the splitter (4), such that both sides of the mesh are flanked by mortar material incoming from the channels (8),
- thereby obtaining a structurally reinforced mortar based construction, in a second position, different from the first position
and, optionally, the method is implemented with resort to the system of claim 8.
